# EUROPÄISCHE PATENTSCHRIFT

(11) **EP 1 645 468 B1**
(45) Veröffentlichungstag und Bekanntmachung des Hinweises auf die Patenterteilung: **16.11.2016**
(21) Anmeldenummer: 05108708.8
(22) Anmeldetag: 21.09.2005
(51) Int. Cl.: B60Q 1/30, B60Q 1/34, F21S 8/12, F21V 5/04

(54) **Leuchteneinheit**
Lamp unit
Unité d'éclairage

(30) Priorität: 24.09.2004 DE 102004046757
(43) Veröffentlichungstag der Anmeldung: 12.04.2006
(73) Patentinhaber: Plastimat GmbH, 33378 Rheda-Wiedenbrück (DE)
(72) Erfinder: Jürgens, Hans-Georg, 33334 Gütersloh (DE)
(74) Vertreter: Dantz, Jan Henning

(56) Entgegenhaltungen:
- EP-A1- 0 960 770
- EP-A2- 0 534 509
- WO-A1-85/01706
- DE-A1- 10 236 304
- DE-C- 499 702
- DE-U1- 29 800 252
- GB-A- 2 395 051
- US-A- 1 482 769
- US-A- 5 567 036
- US-A1- 2002 044 454
- US-B1- 6 347 880
- US-B1- 6 565 244

## Beschreibung

Die Erfindung bezieht sich auf eine Leuchteneinheit für ein mit einer Hubladebühne ausgestattetes Nutzfahrzeug, die einen Satz mit Leuchtmitteln bestückten Hubladebühnenblinkleuchten und gegebenenfalls Seitenmarkierungsleuchten zur Anzeige der Fahrtrichtungsänderung und als Warnlichtblinkanlage enthält, wobei die Hubladebühnenblinkleuchten und gegebenenfalls die Seitenmarkierungsleuchten an das Stromversorgungsnetz des Nutzfahrzeuges anschließbar sind, und jeder Hubladebühnenblinkleuchte eine Leiterplatte zugeordnet ist, wobei die Leuchteneinheit wenigstens eine funktionell einem Blinkrelais entsprechende Schaltung enthält, durch das die Hubladebühnenblinkleuchten und gegebenenfalls die Seitenmarkierungsleuchten intervallmäßig blinken, und wobei jede Hubladebühnenblinkleuchte mit mehreren LED ausgestattet ist.

Die Hubladebühnenblinkleuchten sind als gesetzlich vorgeschriebene Warnblinkanlage ausgebildet.

Es ist bekannt, dass je nach Verwendungszweck Nutzfahrzeuge, beispielsweise in Form eines Lkw, eines Anhängers oder eines Auflegers, mit Hubladebühnen ausgestattet sind für das Be- und Entladen. Die Hubladebühne ist überwiegend so gestaltet, dass sie die Be- und Entladeöffnung des Nutzfahrzeuges nach dem Be- oder Entladevorgang verschließt, demzufolge bildet sie die Heckklappe des Nutzfahrzeuges. Zum Be- und Entladen wird sie zunächst in die Ebene des Bodens des Nutzfahrzeugaufbaues geschwenkt und anschließend abgesenkt. Dazu ist die Hubladebühne mit entsprechend ausgelegten Hub- und Schwenkeinrichtungen ausgestattet. Das Be- und Entladen eines Nutzfahrzeuges erfolgt häufig auch am Straßenrand oder auf öffentlichen Plätzen. Die ausgeklappte und abgesenkte Hubladebühne stellt dann eine besondere Gefahr dar, da sie von Verkehrsteilnehmern schlecht wahrnehmbar ist. Es ist deshalb vorgeschrieben, dass in den Eckbereichen, die im ausgeklappten Zustand dem Aufbau des Nutzfahrzeuges abgewandt liegen, die Hubladebühnenblinkleuchten installiert sind und bei Benutzung immer dort bleiben.

Die Druckschrift WO 85/0176 A1 beschreibt beispielsweise eine Hubladebühnenblinkleuchte mit einer Glühlampe, die zur Absicherung eines Nutzfahrzeugs bei geöffneter Hubladeklappe in Fahrtrichtung gesehen nach hinten abstrahlt. Als Besonderheit ragt diese Hubladebühnenblinkleuchte nach hinten über den Rand der Hubladeklappe hinaus und ist vertikal schwenkbar an einem Klappenbeschlag befestigt, mit dem die Hubladeklappe im geschlossenen Zustand am Fahrzeug gesichert wird. Die verschwenkbare Befestigung der Hubladebühnenblinkleuchte bewirkt, dass die Hubladebühnenblinkleuchte leicht geneigt nach unten leuchtet, wenn die Hubladeklappe geschlossen ist, und leicht geneigt nach oben leuchtet, wenn die Hubladeklappe auf dem Boden aufliegt. Aus der Verwendung einer Glühlampe resultiert eine große Bauform der Hubladebühnenblinkleuchte.

Aus den Druckschriften DE 298 00 252 U1 und EP 0 534 509 A2 sind Hubladebühnenblinkleuchten bekannt, bei denen LEDs (Licht emittierende Dioden) als Lichtquellen verwendet werden. Gemäß der DE 298 00 252 U1 werden beispielsweise mehrere nebeneinander angeordnete LEDs verwendet. Durch den Einsatz der LEDs anstelle von konventionellen Glühlampen können diese Hubladebühnenblinkleuchten sehr flach aufgebaut sein, wodurch sie beim Be- und Entladen nicht stören. Elektrische und/oder elektronische Bauteile, durch die beispielsweise ein Blinken der LEDs erreicht wird, können dabei innerhalb eines Gehäuses der Hubladebühnenblinkleuchten montiert sein.

Neben einer Anordnung einer Blinkrelaisschaltung in der Hubladebühnenblinkleuchte kann die Schaltung der Hubladebühnenblinkleuchten durch ein zusätzliches Blinkrelais, welches beispielsweise im Steuerkasten des Nutzfahrzeuges montiert ist, erfolgen.

Damit das Gehäuse der Hubladebühnenblinkleuchte nicht versehentlich beim Beund Entladen beschädigt oder zerstört wird, wird es üblicherweise aus Metall im Gießverfahren hergestellt, beispielsweise als Zinkdruckgussbauteil oder, wie in der Druckschrift DE 298 00 252 U1 beschrieben ist, als Aluminiumgussteil. Gemäß der Druckschrift EP 0 534 509 A2 wird ein Kunststoffgehäuse verwendet, das mit einem transparenten synthetischen Material, beispielsweise einem Epoxidharz vergossen ist.

Im abgeklappten Zustand liegen die in einer Leuchtfarbe ausgestatteten Gläser der Hubladenbühnenblinkleuchten dem Aufbau des Nutzfahrzeuges abgewandt, das heißt, die Hubladebühnenblinkleuchten sind im Wesentlichen nur für den sich an das Nutzfahrzeug von hinten annähernden Verkehrsteilnehmer sichtbar.

Der Erfindung liegt die Aufgabe zugrunde, eine Leuchteneinheit der eingangs näher beschriebenen Art so auszubilden, dass bei kompaktem Aufbau der Ausfallwinkel der Lichtstrahlen aus den Hubladebühnenblinkleuchten vergrößert wird, so dass der warnende Blinkeffekt auch von den Seiten her sichtbar ist.

Die gestellte Aufgabe wird durch eine Hubladebühnenblinkleuchte der eingangs genannten Art gelöst, die sich dadurch auszeichnet, dass jeder Hubladebühnenblinkleuchte eine Leiterplatte zugeordnet ist, wobei die LED entlang zweier benachbarter Kanten der Leiterplatte in zwei in einem rechten oder annähernd rechten Winkel zueinander stehenden Reihen derart angeordnet sind, dass das Lichtstrahlenfeld seitlich neben dem Nutzfahrzeug sichtbar ist.

Die Schaltung ist so getroffen, dass entsprechend der einschlägigen Vorschrift die Hubladebühnenblinkleuchten beider Seiten gleichzeitig leuchten. Zusätzlich ist durch eine entsprechende Gestaltung der Hubladebühnenblinkleuchten dafür Sorge getragen, dass diese auch von der Seite gesehen werden können. Jede Leuchteneinheit oder jede Leuchte weist selbst eine intelligente Schaltung auf, durch die ein jetziges Blinkrelais, das im Fahrzeug oder in der Steuereinheit montiert ist, überflüssig wird. Die Schaltung könnte als sogenannte intelligente Schaltung bezeichnet werden. In bevorzugter Ausführung ist jedoch vorgesehen, dass jeder Hubladebühnenblinkleuchte diese Schaltung zugeordnet ist. Jeder Hubladebühnenblinkleuchte ist eine Leiterplatte zugeordnet. Deshalb wird jede Schaltung auf jeder Leiterplatte integriert. Die Seitenmarkierungsleuchten werden üblicherweise bislang bei Dunkelheit im Dauerlicht eingeschaltet. In weiterer Ausgestaltung ist vorgesehen, dass auch die Seitenmarkierungsleuchten mit dieser entsprechenden Schaltung ausgestattet sind, so dass ein seitlich neben dem Nutzfahrzeug stehender Zweiradfahrer erkennen kann, dass das Nutzfahrzeug abbiegen will.

Eine konstruktiv einfache technische Lösung wird erreicht, wenn jede Leiterplatte innerhalb eines Gehäuses jeder Hubladebühnenblinkleuchte und/oder jeder Seitenmarkierungsleuchte eingebaut ist. Die Leuchteneinheit ist so gestaltet, dass neue und alte Nutzfahrzeuge damit ausgestattet werden können, die Schaltung ist so ausgelegt, dass die Blinkleuchten nach wie vor von dem vorhandenen Relais geschaltet werden. Bei Neufahrzeugen kann in kostenmindernder Weise auf das bislang stets vorhandene separate Blinkrelais verzichtet werden, als Ersatz wird die Blinkleuchte von der eigenen Schaltung oder der Schaltung der Hubladebühnenblinkleuchten geschaltet.

Die Schaltung der Hubladenbühnenblinkleuchten der Leuchteneinheit kann in den üblichen Schaltungsarten vorgenommen werden. So ist vorgesehen, dass die Hubladenbühnenblinkleuchten elektrisch in Reihe geschaltet sind, und dass die erste Steuerplatine der zugehörigen Hubladenbühnenblinkleuchte und/oder Seitenmarkierungsleuchte mit dem Blinkrelais ausgestattet ist. Sofern das Blinkrelais in einer Seitenmarkierungsleuchte angeordnet ist, ist eine solche Ausführung nur bei Neufahrzeugen möglich. Unabhängig davon, ob eine Hubladenbühnenblinkleuchte oder eine Seitenmarkierungsleuchte mit dem Blinkrelais ausgestattet ist, würden beim Abbiegen des Fahrzeuges die Hubladenbühnenblinkleuchten blinken, was jedoch von den Verkehrsteilnehmern nicht wahrgenommen wird, da die Hubladenbühne geschlossen ist.

Alternativ ist es jedoch auch möglich, dass die Hubladenbühnenblinkleuchten der Leuchteneinheit elektrisch parallel geschaltet sind, und dass die Leiterplatten aller Hubladenbühnenblinkleuchten mit einem Blinkrelais ausgestattet sind. Bei dieser Ausführung würden die restlichen Blinkleuchten des Nutzfahrzeuges unabhängig von dem Blinkrelais der Leiterplatte schaltbar sein.

Als Leuchtmittel werden sogenannte LED's (Licht emittierende Dioden) verwendet, die den Vorteil bieten, dass die Lichtintensität besonders groß ist. Diese Lichtintensität kann jedoch noch erhöht werden, wenn in den Randbereichen des Gehäuses jeder Hubladenbühnenblinkleuchte der Leuchteneinheit den Leuchtmitteln bzw. den Dioden zugeordnete Linsen eingesetzt sind, die mittels Lichtwellenleiter mit den Leuchtmitteln lichtübertragend in Wirkverbindung stehen. Sinngemäß wird die Lichtintensität der Leuchtmittel durch die Linse verstärkt. In besonders vorteilhafter Weise ist vorgesehen, dass jede Linse als Sammellinse ausgebildet ist, das heißt, die Lichtstrahlen werden gebündelt, da die Dicke jeder Linse im mittleren Bereich größer ist als in den Außenbereichen. Die Linsen können in den üblichen Ausführungen gestaltet sein, beispielsweise plan-konvex oder konkavkonvex.

Obwohl es mit Lichtwellenleitern möglich ist, die von einem Leuchtmittel abgehenden Lichtstrahlen umzulenken, ist vorgesehen, dass zwecks einer einfachen Ausführung jede Linse fluchtend zur zugehörigen LED in den Randbereich in den Randbereich des Gehäuses eingesetzt ist. Dadurch wird die Verbindung zwischen der LED und der Linse so kurz wie möglich gehalten. In einer bevorzugten Ausführung ist vorgesehen, dass zwei Linsen in zwei rechtwinklig oder annähernd rechtwinklig zueinander stehenden Randbereichen des Gehäuses eingesetzt sind. Dabei sind die beiden äußeren Linsen der beiden Hubladenbühnenblinkleuchten dann so gesetzt, dass die Lichtstrahlen auch dann sichtbar sind, wenn Personen oder Fahrzeuge seitlich neben dem Nutzfahrzeug hergehen oder fahren.
Wie bereits erwähnt, ist jede Hubladebühnenblinkleuchte mit mehreren LED's ausgestattet, wobei angestrebt wird, die Anzahl so gering wie möglich zu halten, wenn die jeweilige LED eine entsprechende Lichtintensität ausstrahlt.

Damit die Lichtintervalle auch seitlich sichtbar sind, ist vorgesehen, dass die LED's in zwei im Winkel zueinander stehenden Reihen entsprechend derart angeordnet sind, dass das Lichtstrahlenfeld seitlich sichtbar ist. Da jede Hubladebühnenblinkleuchte mit geringstmöglichen Abmessungen gefertigt werden sollte, ist vorgesehen, dass, in der Projektion gesehen, das Gehäuse jeder Hubladebühnenblinkleuchte kreissegmentförmig gestaltet ist. Die Spitze sollte jedoch abgerundet sein und, bezogen auf den ausgeklappten Zustand der Hubladebühne, an der dem Aufbau des Nutzfahrzeuges abgewandten Seite liegen. Sofern in die Lichtaustritts-öffnungen des Gehäuses Reflektorgläser eingesetzt sind, verlaufen sie dann in einem entsprechenden Bogen. In einer bevorzugten Ausführungsform ist vorgesehen, dass das Gehäuse jeder Hubladebühnenblinkleuchte viertelkreissegmentförmig gestaltet ist, wobei die Lichtaustrittsöffnung gerundet in einem Bogen verläuft und, bezogen auf den ausgeklappten Zustand der Hubladebühne, dem Aufbau des Nutzfahrzeuges abgewandt liegt. In technisch einfacher und somit vorteilhafter Weise ist vorgesehen, dass die Schaltung auf jeder Leiterplatte integriert ist.

In bevorzugter Ausführung ist die Leuchteneinheit mit zwei Licht emittierenden Dioden (LED) ausgestattet, denen jeweils ein speziell ausgeformter Lichtleiter zugeordnet ist, so dass eine beidseitige Lichtstreuung erreichbar ist. Der Winkel einer Seite liegt im Bereich von 80°, insgesamt beträgt die Lichtstreuung dann 160°. Die gesetzlichen Vorschriften sind damit erfüllt.

Anhand der beiliegenden Zeichnung wird die Erfindung noch näher erläutert. Es zeigt:
- Figur 1: Eine Hubladebühnenblinkleuchte der erfindungsgemäßen Leuchteneinheit in einer Draufsicht, jedoch mit abgenommenen Oberteil, in einer ersten Ausführungsform, und
- Figur 2: eine Hubladenbühnenblinkleuchte in einer zweiten Ausführungsform.

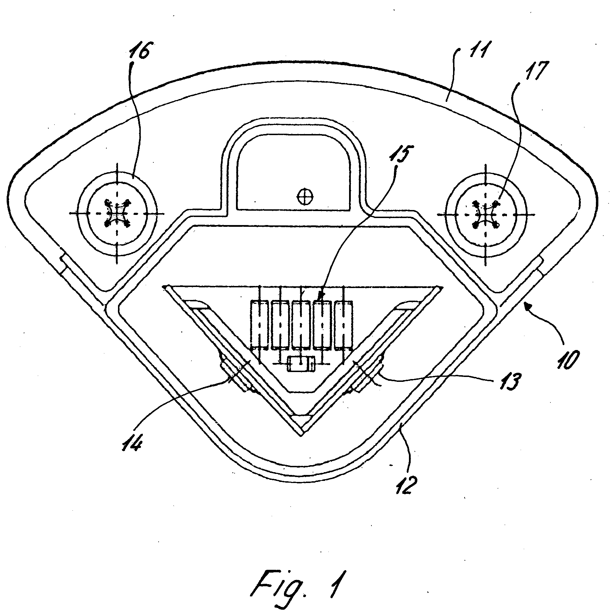

Die in der Figur 1 dargestellte Hubladebühnenblinkleuchte 10 ist, in der Projektion gesehen, viertelkreisförmig gestaltet. Die noch näher beschriebenen Bauteile sind im Inneren eines Gehäuses montiert, welches aus einem Unterteil 11 und einem nicht dargestellten Oberteil besteht. An der dem Kreisbogen abgewandten Seite ist das Gehäuse mit einem Lichtaustrittsschlitz versehen, in die ein in der Form angepasstes Reflektorglas 12 eingesetzt ist. Das Reflektorglas 12 ist in einer üblichen, allgemein gut sichtbarer Farbe ausgeführt, beispielsweise orange. Das Innere des Gehäuses ist durch Stege in zwei Kammern unterteilt. In die dem Reflektorglas 12 zugewandte Kammer sind zwei Reihen von LED's 13, 14 in entsprechende Fassungen eingesetzt. Die beiden Reihen der LED's 13, 14 stehen im dargestellten Ausführungsbeispiel im rechten Winkel zueinander. In diese Kammer ist auch eine Leiterplatte 15 eingesetzt, die mit den Bauteilen der Schaltung bestückt ist. Zusätzlich enthält diese Leiterplatte 15 noch einen Baustein, um die LED's intervallmäßig gemäß der gesetzlichen Vorschriften zu schalten. Die Hubladebühnenblinkleuchte 10 kann mittels Schrauben 16, 17 an der Hubladebühne befestigt werden.

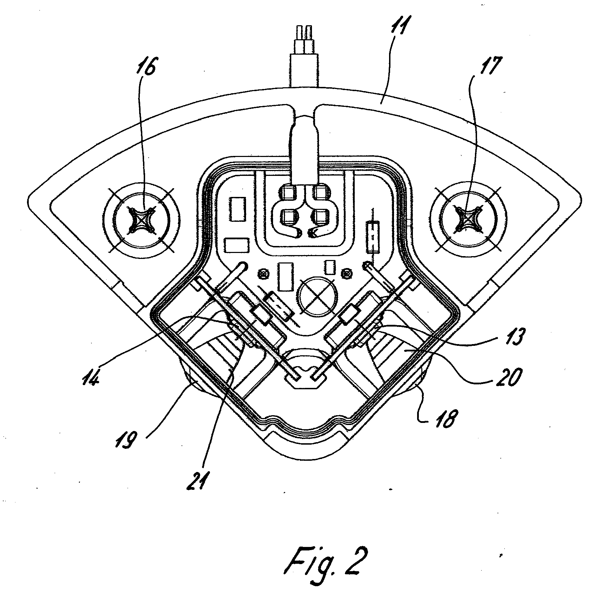

Die in der Figur 2 dargestellte Hubladenbühnenblinkleuchte 10 ist mit einer optischen Einrichtung ausgestattet. Diese Hubladenbühnenblinkleuchte 10 enthält auch das Unterteil 11 und die beiden im Abstand zu den Rändern des Gehäuses stehenden Leuchtmittel in Form der LED's 13, 14. Anstelle des Reflektorglases 12 sind jedoch in die beiden rechtwinklig zueinander stehenden Ränder des Gehäuses Linsen 18, 19 eingesetzt. Diese Linsen 18, 19 sind zur Bündelung der von den LED's 13, 14 ausgesendeten Lichtstrahlen als Sammellinsen ausgebildet, das heißt, der mittlere Bereich ist dicker als der Randbereich. Darüber hinaus sind diese Linsen 18, 19 kreisrund oder ovalförmig gestaltet. Die Linsen 18, 19 stehen über ein Bündel von Lichtwellenleitern 20, 21 mit den LED's 13, 14 in einer Wirkverbindung. Die LED's 13, 14 stehen darüber hinaus fluchtend zu den Linsen 18, 19, so dass die Verbindungen zwischen den LED's 13, 14 und den Linsen 18, 19 so kurz wie möglich gehalten ist. Wie die Figur 2 deutlich zeigt, vergrößert sich im Querschnitt jedes Bündel der Lichtwellenleiter 20, 21 in Richtung zu der Linse 18 bzw. 19.

Die Erfindung ist nicht auf das dargestellte Ausführungsbeispiel beschränkt. Wesentlich ist, dass bei der Installation von anderen Leuchteneinheiten bei Neufahrzeugen folgende Zusatzfunktionen möglich werden. Wenn zum Beispiel die Seitenmarkierungsleuchte am Nutzfahrzeug eine intelligente Schaltung gleich dem Blinkrelais erhält, so wäre es möglich, dass die Seitenmarkierungsleuchte nicht nur bei Dunkelheit (Dauerlicht) leuchtet, sondern auch bei Betätigung des Blinkers alle Seitenmarkierungsleuchten mit blinken für die Zeit des Blinkvorganges. Hierdurch würde die Sicherheit im Straßenverkehr wesentlich erhöht. Beispiel: abbiegender LKW an der Kreuzung, rechts ein Mopedfahrer, der wegen seines Helms die vordere Blinkleuchte nicht erkennt, aber die Seitenmarkierungsleuchte. Zur Erhöhung der Lichtintensität ist vorgesehen, dass den Leuchtmitteln, vorzugsweise in Form der LED's 13, 14 eine optische Einrichtung zugeordnet ist, die im wesentlichen aus jeder LED 13, 14 zugeordneten Linse 18, 19 besteht, wobei jede Linse 18, 19 über ein Bündel von Lichtwellenleitern 20, 21 lichtleitend in Wirkverbindung steht.

### Bezugszeichen

- 10: Hubladenbühnenblinkleuchte
- 11: Unterteil
- 12: Reflektorglas
- 13, 14: LED
- 15: Leiterplatte
- 16, 17: Schrauben
- 18, 19: Linsen
- 20,21: Lichtwellenleiter

## Patentansprüche

1. Leuchteneinheit für ein mit einer Hubladebühne ausgestattetes Nutzfahrzeug,
die einen Satz mit Leuchtmitteln bestückten Hubladebühnenblinkleuchten (10) und gegebenenfalls Seitenmarkierungsleuchten zur Anzeige der Fahrtrichtungsänderung und als Warnlichtblinkanlage enthält, wobei die Hubladebühnenblinkleuchten (10) und gegebenenfalls die Seitenmarkierungsleuchten an das Stromversorgungsnetz des Nutzfahrzeuges anschließbar sind, wobei die Leuchteneinheit wenigstens eine funktionell einem Blinkrelais entsprechende Schaltung enthält, durch das die Hubladebühnenblinkleuchten (10) und gegebenenfalls die Seitenmarkierungsleuchten intervallmäßig blinken können, und wobei jede Hubladebühnenblinkleuchte (10) mit mehreren LED (13, 14) ausgestattet ist, **dadurch gekennzeichnet, dass** jeder Hubladebühnenblinkleuchte eine Leiterplatte (15) zugeordnet ist, wobei die LED (13, 14) entlang zweier benachbarter Kanten der Leiterplatte (15) in zwei in einem rechten oder annähernd rechten Winkel zueinander stehenden Reihen derart angeordnet sind, dass das Lichtstrahlenfeld seitlich neben dem Nutzfahrzeug sichtbar ist.

2. Leuchteneinheit nach Anspruch 1, **dadurch gekennzeichnet, dass** jede Leiterplatte (15) innerhalb eines Gehäuses der Hubladebühnenblinkleuchte (10) und/oder Seitenmarkierungsleuchte montiert ist.

3. Leuchteneinheit nach Anspruch 1 oder 2, **dadurch gekennzeichnet, dass** die Hubladebühnenblinkleuchten (10) der Leuchteneinheit elektrisch in Reihe schaltbar sind, und dass die erste Leiterplatine (15) der zugehörigen Hubladebühnenblinkleuchte (10) und/oder Seitenmarkierungsleuchte mit dem Blinkrelais ausgestattet ist.

4. Leuchteneinheit nach Anspruch 1 oder 2, **dadurch gekennzeichnet, dass** die Hubladebühnenblinkleuchten (10) der Leuchteneinheit elektrisch parallel schaltbar sind, und dass die Leiterplatten (15) aller Hubladebühnenblinkleuchten (10) mit einem Blinkrelais ausgestattet sind.

5. Leuchteneinheit nach Anspruch 4, **dadurch gekennzeichnet, dass** die restlichen Blinkleuchten des Nutzfahrzeuges unabhängig von dem Blinkrelais der Leiterplatte (15) schaltbar sind.

6. Leuchteneinheit nach Anspruch 1, **dadurch gekennzeichnet, dass** in den Randbereichen des Gehäuses jeder Hubladenbühnenblinkleuchte (10) der Leuchteneinheit den Leuchtmitteln (13, 14) zugeordnete Linsen (18, 19) eingesetzt sind, die mittels Lichtwellenleiter (20, 21) mit den Leuchtmitteln (13, 14) lichtübertragend in Wirkverbindung stehen.

7. Leuchteneinheit nach Anspruch 6, **dadurch gekennzeichnet, dass** jede Linse (18, 19) als Sammellinse ausgebildet ist.

8. Leuchteneinheit nach Anspruch 6 oder 7, **dadurch gekennzeichnet, dass** jede Linse (18, 19) fluchtend zum zugehörigen Leuchtmittel (13, 14) in den Randbereich des Gehäuses eingesetzt ist.

9. Leuchteneinheit nach einem oder mehreren der vorhergehenden Ansprüche 6 bis 8, **dadurch gekennzeichnet, dass** zwei Linsen (18, 19) in zwei rechtwinklig oder annähernd rechtwinklig zueinander stehenden Randbereichen des Gehäuses eingesetzt sind.

10. Leuchteneinheit nach einem der Ansprüche 1 bis 9, **dadurch gekennzeichnet, dass** die aus den LED (13, 14) gebildeten Reihen einen Winkel einschließen, der zusammen 180° beträgt.

11. Leuchteneinheit nach Anspruch 2 oder 6, **dadurch gekennzeichnet, dass** das Gehäuse der Hubladebühnenblinkleuchte (10) kreissegmentförmig gestaltet ist.

12. Leuchteneinheit nach Anspruch 2, 6 oder 11, **dadurch gekennzeichnet, dass** das Gehäuse der Hubladebühnenblinkleuchte (10) viertelkreissegmentförmig gestaltet ist, wobei die Lichtaustrittsöffnung gerundet in einem Bogen verläuft und, bezogen auf den ausgeklappten Zustand der Hubladebühne, dem Aufbau des Nutzfahrzeuges abgewandt liegen kann.

13. Leuchteneinheit nach einem oder mehreren der vorhergehenden Ansprüche 1 bis 12, **dadurch gekennzeichnet, dass** die Schaltung auf jeder Leiterplatte (15) integriert ist.

14. Leuchteneinheit nach einem oder mehreren der vorhergehenden Ansprüche 1 bis 13, **dadurch gekennzeichnet, dass** die Leuchteneinheit mit zwei Licht emittierenden Dioden (LED) und jeweils einem, speziell aus geformten Lichtleitern derart ausgestattet ist, dass eine beidseitige Lichtstreuung erreichbar ist, vorzugsweise im Bereich von 80°.

## Claims

1. Lamp unit for a commercial vehicle equipped with a tail lift, said lamp unit containing a set of tail lift indicator lights (10), which are fitted with lighting means, and optionally side marker lights for indicating a change in the direction of travel and as a flashing warning light system, wherein the tail lift indicator lights (10) and optionally the side marker lights can be connected to the power supply system of the commercial vehicle, wherein the lamp unit contains at least one circuit which corresponds in functional terms to a flasher relay and by virtue of which the tail lift indicator lights (10) and optionally the side marker lights can flash at intervals, and wherein each tail lift indicator light (10) is equipped with a plurality of LEDs (13, 14), **characterized in that** each tail lift indicator light is assigned a printed circuit board (15), wherein the LEDs (13, 14) are arranged along two adjacent edges of the printed circuit board (15) in two rows located at a right or approximately right angle to one another, so that the light ray field is visible laterally next to the commercial vehicle.

2. Lamp unit according to claim 1, **characterized in that** each printed circuit board (15) is mounted within a housing of the tail lift indicator light (10) and/or side marker light.

3. Lamp unit according to claim 1 or 2, **characterized in that** the tail lift indicator lights (10) of the lamp unit can be electrically switched in series, and **in that** the first printed circuit board (15) of the associated tail lift indicator light (10) and/or side marker light is equipped with the flasher relay.

4. Lamp unit according to claim 1 or 2, **characterized in that** the tail lift indicator lights (10) of the lamp unit can be electrically switched in parallel, and **in that** the printed circuit boards (15) of all tail lift indicator lights (10) are equipped with a flasher relay.

5. Lamp unit according to claim 4, **characterized in that** the remaining indicator lights of the commercial vehicle can be switched independently of the flasher relay of the printed circuit board (15).

6. Lamp unit according to claim 1, **characterized in that** lenses (18, 19) assigned to the lighting means (13, 14) are inserted in the edge regions of the housing of each tail lift indicator light (10) of the lamp unit, said lenses being operatively connected to the lighting means (13, 14) in a light-transmitting manner by means of optical waveguides (20, 21).

7. Lamp unit according to claim 6, **characterized in that** each lens (18, 19) is configured as a collecting lens.

8. Lamp unit according to claim 6 or 7, **characterized in that** each lens (18, 19) is inserted in the edge region of the housing in alignment with the associated lighting means (13, 14).

9. Lamp unit according to one or more of the preceding claims 6 to 8, **characterized in that** two lenses (18, 19) are inserted in two edge regions of the housing which are located at a right or approximately right angle to one another.

10. Lamp unit according to any of claims 1 to 9, **characterized in that** the rows formed of the LEDs (13, 14) enclose an angle that is altogether 180°.

11. Lamp unit according to claim 2 or 6, **characterized in that** the housing of the tail lift indicator light (10) is shaped as a segment of a circle.

12. Lamp unit according to claim 2, 6 or 11, **characterized in that** the housing of the tail lift indicator light (10) is shaped as a quadrant of a circle, wherein the light exit opening runs in rounded fashion in an arc and, based on the folded-out state of the tail lift, may face away from the structure of the commercial vehicle.

13. Lamp unit according to one or more of the preceding claims 1 to 12, **characterized in that** the circuit is integrated on each printed circuit board (15).

14. Lamp unit according to one or more of the preceding claims 1 to 13, **characterized in that** the lamp unit is equipped with two light-emitting diodes (LEDs) and in each case with one specially shaped light conductor so that light scattering on both sides can be achieved, preferably in the range of 80°.

## Revendications

1. Unité de feux pour un véhicule utilitaire équipé d'un hayon élévateur, qui contient un bloc de feux clignotants pour hayon élévateur (10) garnis de lampes et éventuellement des feux de position latéraux destinés à indiquer le changement de direction et à servir d'installation de feux de détresse, les feux clignotants pour hayon élévateur (10) et éventuellement les feux de position latéraux pouvant être raccordés au réseau d'alimentation électrique du véhicule utilitaire, l'unité de feux contenant au moins un circuit dont le fonctionnement équivaut à celui d'un relais clignotant, qui peut faire clignoter par intermittences les feux clignotants pour hayon élévateur (10) et éventuellement les feux de position latéraux, et chaque feu clignotant pour hayon élévateur (10) étant équipé de plusieurs LED (13, 14), **caractérisée en ce que** chaque feu clignotant pour hayon élévateur est associé à une carte de circuits (15), les LED (13, 14) étant disposées le long de deux bords voisins de la carte de circuits (15) en deux rangées formant l'une avec l'autre un angle droit ou approximativement droit, de telle manière que le champ de faisceaux lumineux soit visible latéralement à côté du véhicule utilitaire.

2. Unité de feux selon la revendication 1, **caractérisée en ce que** chaque carte de circuits (15) est montée à l'intérieur d'un boîtier de feu clignotant pour hayon élévateur (10) et/ou de feu de position latéral.

3. Unité de feux selon la revendication 1 ou 2, **caractérisée en ce que** les feux clignotants pour hayon élévateur (10) de l'unité de feux peuvent être montés électriquement en série et **en ce que** la première carte de circuits (15) du feu clignotant pour hayon élévateur (10) et/ou du feu de position latéral correspondant est équipée du relais clignotant.

4. Unité de feux selon la revendication 1 ou 2, **caractérisée en ce que** les feux clignotants pour hayon élévateur (10) de l'unité de feux peuvent être montés électriquement en parallèle et **en ce que** les cartes de circuits (15) de tous les feux clignotants pour hayon élévateur (10) sont équipées d'un relais clignotant.

5. Unité de feux selon la revendication 4, **caractérisée en ce que** les autres feux clignotants du véhicule utilitaire peuvent être commutés indépendamment des relais clignotant de la carte de circuits (15).

6. Unité de feux selon la revendication 1, **caractérisée en ce que** sont insérées dans les zones de bord du boîtier de chaque feu clignotant de hayon élévateur (10) de l'unité de feux des lentilles (18, 19) associées aux lampes (13, 14), qui sont en liaison active avec les lampes (13, 14) au moyen de guides d'ondes lumineuses (20, 21) pour transmettre la lumière.

7. Unité de feux selon la revendication 6, **caractérisée en ce que** chaque lentille (18, 19) est conformée comme une lentille collectrice.

8. Unité de feux selon la revendication 6 ou 7, **caractérisée en ce que** chaque lentille (18, 19) est insérée dans la zone de bord du boîtier en affleurement avec la lampe (13, 14) correspondante.

9. Unité de feux selon une ou plusieurs des revendications 6 à 8, **caractérisée en ce que** deux lentilles (18, 19) sont insérées dans des zones de bord du boîtier formant entre elles un angle droit ou approximativement droit.

10. Unité de feux selon l'une des revendications 1 à 9, **caractérisée en ce que** les rangées de LED (13, 14) forment un angle qui totalise 180°.

11. Unité de feux selon la revendication 2 ou 6, **caractérisée en ce que** le boîtier du feu clignotant pour hayon élévateur (10) est en forme de segment de cercle.

12. Unité de feux selon la revendication 2, 6 ou 11, **caractérisée en ce que** le boîtier du feu clignotant pour hayon élévateur (10) est en forme de quart de cercle, l'ouverture de sortie de la lumière étant arrondie en arc de cercle et pouvant être tournée à l'opposé de la structure du véhicule utilitaire par rapport à l'état déployé du hayon élévateur.

13. Unité de feux selon une ou plusieurs des revendications 1 à 12, **caractérisée en ce que** le circuit est intégré sur chaque carte de circuits (15).

14. Unité de feux selon une ou plusieurs des revendications 1 à 13, **caractérisée en ce qu'**elle est équipée de deux diodes électroluminescentes (LED) et pour chacune d'un guide d'ondes lumineuses spécialement conformé, de façon à obtenir une diffusion de la lumière des deux côtés, de préférence sur une zone de 80°.
